# EUROPÄISCHE PATENTSCHRIFT

(11) **EP 3 555 874 B1**
(45) Veröffentlichungstag und Bekanntmachung des Hinweises auf die Patenterteilung: **17.05.2023**
(21) Anmeldenummer: 17822613.0
(22) Anmeldetag: 13.12.2017
(51) Int. Cl.: G06V 20/54, G06V 20/58, G07C 5/00, G08G 1/0965, G08B 25/01, G08G 1/00

(54) **VORRICHTUNG, VERFAHREN UND COMPUTERPROGRAMM FÜR EIN FAHRZEUG ZUM BEREITSTELLEN EINER UNFALLMELDUNG ÜBER EINEN UNFALL AN EINE NOTRUFSTELLE**
DEVICE, METHOD, AND COMPUTER PROGRAM FOR A VEHICLE FOR PROVIDING AN ACCIDENT NOTIFICATION REGARDING AN ACCIDENT TO AN EMERGENCY CALL CENTER
DISPOSITIF, PROCÉDÉ ET PROGRAMME INFORMATIQUE POUR UN VÉHICULE DESTINÉ À FOURNIR À UN CENTRE D'APPEL D'URGENCE UN SIGNALEMENT D'ACCIDENT À PROPOS D'UN ACCIDENT

(30) Priorität: 19.12.2016 DE 102016225437
(43) Veröffentlichungstag der Anmeldung: 23.10.2019
(73) Patentinhaber: Volkswagen Aktiengesellschaft, 38440 Wolfsburg (DE)
(72) Erfinder: POHLENZ, Christian, 30625 Hannover (DE)
(86) Internationale Anmeldenummer: PCT/EP2017/082499
(87) Internationale Veröffentlichungsnummer: WO 2018/114492

(56) Entgegenhaltungen:
- DE-A1- 10 338 759
- FR-A1- 2 887 064
- GB-A- 2 528 477
- US-A1- 2009 015 684
- US-A1- 2013 267 194

## Beschreibung

Die Erfindung bezieht sich auf eine Vorrichtung, ein Verfahren und ein Computerprogramm für ein Fahrzeug zum Bereitstellen von Information über eine Unfallmeldung über einen Unfall an eine Notrufstelle, genauer, aber nicht ausschließlich, basierend auf Sensordaten von Sensoren des Fahrzeugs.

Die Sicherheit von Insassen von Fahrzeugen nimmt eine wichtige Stellung in der Entwicklung von Fahrzeugen ein. Sicherheitskonzepte umfassen häufig eine Vielzahl von Maßnahmen zum Steigern der Fahrsicherheit, von einem strukturellen Schutz der Fahrgastzelle über Airbags und Gurtstraffsysteme zu einem automatisierten Absatz von Notrufen, mit dem Ziel, Insassen der Fahrzeuge im Falle eines Unfalls besser schützen zu können.

Ferner sind Fahrzeuge heute häufig vernetzt, etwa mit Zentralstellen der Fahrzeughersteller, mit einer Sprach- bzw. Datenverbindung oder direkt zu weiteren Fahrzeugen oder zu Verkehrsinfrastruktur am Straßenrand. Beispielsweise ermöglicht die Vernetzung der Fahrzeuge eine Übertragung von Daten mit einer Vielzahl von Kommunikationspartnern, etwa um Fahrzeugfunktionen im vernetzten Fahren bereitstellen zu können. Beispielsweise kann die Vernetzung der Fahrzeuge eine Übertragung von Fahrzeug-Daten ermöglichen, die von zentralen Leitstellen, etwa Stau-Leitstellen, genutzt werden können, etwa um eine Routenführung einer Vielzahl von Fahrzeugen aufeinander abzustimmen. Bei der Übertragung von Daten ist dabei häufig sicherzustellen, dass eine Privatsphäre des Fahrzeughalters und von anderen Fahrzeugen gewahrt bleibt.

Aus FR 2 887 064 A1 ist beispielsweise ein System bekannt, das im Falle einer Notsituation eine Identität und eine Position eines Fahrzeugs an ein Notrufsystem übermitteln kann. Zusätzlich dazu kann das System Bilddaten an die Notrufstelle übermitteln, beispielsweise Bilddaten des Fahrzeuginnern und Bilddaten einer Umgebung des Fahrzeugs.

Aus US 2013/0267194 A1 ist ein System zum Benachrichtigen einer entfernten Einrichtung über einen Unfall bekannt. In diesem System werden Sensoren innerhalb des Fahrzeugs genutzt, um den Zustand der Passagiere im Falle eines Unfalls zu bestimmen. Auch verfügt das Fahrzeug über Umgebungssensoren, diese werden jedoch lediglich ausgewertet, um den Unfallhergang zu bestimmen, und nicht um andere Unfallteilnehmer zu identifizieren und der entfernten Stelle zu melden.

Es besteht der Bedarf nach einem verbesserten Konzept für eine Notruffunktion des Fahrzeugs, das eine Erhöhung der Fahrsicherheit ermöglicht.

Diesem Bedarf wird durch die unabhängigen Ansprüche Rechnung getragen. Vorteilhafte Ausführungsformen sind in den abhängigen Ansprüchen angegeben.

Die Vorrichtung kann beispielsweise detailliertere Daten zu dem Notruf (anonym) der Notrufstelle übermitteln, was einer Einsatzstelle eine zielgenauere Planung von Rettungseinsätzen ermöglichen kann. So kann in manchen Fällen erreicht werden, dass eine ausreichende Anzahl von Rettungsfahrzeugen vor Ort zur Verfügung steht und eine Sicherheit der Verkehrsteilnehmer erhöht wird.

Beispielsweise können die Sensordaten Bilddaten eines Außen-Kamerasensors des Fahrzeugs umfassen. Das Kontrollmodul kann ausgebildet sein, um basierend auf einer Objekterkennung in den Bilddaten zumindest einen Teil der weiteren an dem Unfall beteiligten Verkehrsteilnehmer zu erkennen. Das Kontrollmodul kann ausgebildet sein, die weiteren an dem Unfall beteiligten Verkehrsteilnehmer basierend auf der Objekterkennung in die Mehrzahl von Kategorien einzuordnen.

Die Objekterkennung kann beispielsweise für die Rettungsdienste relevante Unfalldetails erkennen und so eine genauere Planung des Einsatzes ermöglichen. Ferner kann die Objekterkennung beispielsweise ein Berechnen einer schematischen Darstellung des Unfalls ermöglichen und so einerseits eine Privatsphäre der weiteren Verkehrsteilnehmer wahren als auch eine Datenübertragungsmenge reduzieren.

In zumindest manchen Ausführungsbeispielen kann das Kontrollmodul ausgebildet sein, um basierend auf den Sensordaten einen bevorstehenden Aufprall zu erkennen. Das Kontrollmodul kann ausgebildet sein, um die Sensordaten basierend auf dem bevorstehenden Aufprall zwischenzuspeichern. So können die zwischengespeicherten Sensordaten beispielsweise für eine Analyse der Unfallsituation oder eine Rekonstruktion des Unfallhergangs genutzt werden. Ferner können so auch bei einer Beschädigung von Sensoren des Fahrzeugs während des Unfalls valide Sensordaten zur Analyse zu Verfügung stehen. Beispielsweise kann das Kontrollmodul ausgebildet sein, um die Information über die weiteren an dem Unfall beteiligten Verkehrsteilnehmer basierend auf Sensordaten, die vor dem Aufprall erhalten wurden, zu bestimmen.

Erfindungsgemäß ist die zumindest eine Kommunikations-Schnittstelle ferner zu einer Fahrzeug-zu-Fahrzeug-Kommunikation mit zumindest einem Teil der weiteren Verkehrsteilnehmer ausgebildet. Das Kontrollmodul ist ausgebildet, um über Fahrzeug-zu-Fahrzeug-Kommunikation Information über Insassen der weiteren Verkehrsteilnehmer zu erhalten. Das Kontrollmodul ist ausgebildet, um die Information über die weiteren an dem Unfall beteiligten Verkehrsteilnehmer basierend auf den Sensordaten und basierend auf der Information über die Insassen der weiteren Verkehrsteilnehmer zu bestimmen. Beispielsweise kann die Information über die Insassen der weiteren Verkehrsteilnehmer Information über Verletzungen der Insassen der weiteren Verkehrsteilnehmer umfassen. So können beispielsweise detaillierte Informationen zu potentiell verletzten Verkehrsteilnehmer gesammelt werden.

Beispielsweise kann das Kontrollmodul ausgebildet sein, um weitere Sensordaten von dem zumindest einen Teil der weiteren Verkehrsteilnehmer zu erhalten. Das Kontrollmodul kann ausgebildet sein, um die Information über die weiteren an dem Unfall beteiligten Verkehrsteilnehmer basierend auf den weiteren Sensordaten zu bestimmen. Dies kann beispielsweise eine Sensorreichweite und eine akkumulierte Genauigkeit von Sensoren, die für die Bestimmung der Information über die weiteren an dem Unfall beteiligten Verkehrsteilnehmer genutzt werden, erhöhen.

Beispielsweise kann die Information über die Unfallmeldung Information über eine Anzahl der an dem Unfall beteiligten Verkehrsteilnehmer und/oder Information über eine Anzahl von Insassen der an dem Unfall beteiligten Verkehrsteilnehmer umfassen. So kann beispielsweise eine genauere Einsatzplanung von Einsatzfahrzeugen ermöglicht werden.

Beispielsweise können die Sensordaten Bilddaten eines Außen-Kamerasensors des Fahrzeugs umfassen. Das Kontrollmodul kann ausgebildet sein, um die Information über die Unfallmeldung basierend auf den Bilddaten bereitzustellen. Die Information über die Unfallmeldung kann eine schematische Darstellung des Unfalls basierend auf den Bilddaten umfassen. So kann die schematische Darstellung des Unfalls beispielsweise eine Bilddatei über den Unfall umfassen, bei dem die weiteren Verkehrsteilnehmer durch schematische Darstellungen ersetzt wurden. Alternativ oder zusätzlich kann die schematische Darstellung des Unfalls beispielsweise dreidimensionales Modell des Unfalls umfassen, etwa als Standbild oder als Rekonstruktion des Unfalls in mehreren Phasen.

Ausführungsbeispiele schaffen ferner ein Verfahren für ein Fahrzeug zum Bereitstellen einer Unfallmeldung über einen Unfall an eine Notrufstelle. Das Verfahren umfasst Erhalten von Sensordaten von Innensensoren und Außensensoren des Fahrzeugs. Das Verfahren umfasst ferner Bestimmen von Information über Insassen des Fahrzeugs basierend auf den Sensordaten. Das Verfahren umfasst ferner Bestimmen von Information über weitere an dem Unfall beteiligte Verkehrsteilnehmer basierend auf den Sensordaten. Die Information über die weiteren an dem Unfall beteiligten Verkehrsteilnehmer ist in eine Mehrzahl von Kategorien unterteilt. Die Mehrzahl von Kategorien umfasst zumindest die Kategorien Fußgänger, Zweiräder und Automobile. Das Verfahren umfasst ferner Bereitstellen von Information über die Unfallmeldung basierend auf der Information über die Insassen des Fahrzeugs und basierend auf der Information über die weiteren an dem Unfall beteiligte Verkehrsteilnehmer basierend auf den Sensordaten.

Ausführungsbeispiele schaffen ferner ein Programm mit einem Programmcode zum Durchführen des Verfahrens, wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: zeigt ein Blockdiagramm einer Vorrichtung für ein Fahrzeug zum Bereitstellen einer Unfallmeldung über einen Unfall an eine Notrufstelle;
- Fig. 2: zeigt ein Flussdiagramm eines (entsprechenden) Verfahrens für ein Fahrzeug zum Bereitstellen einer Unfallmeldung über einen Unfall an eine Notrufstelle; und
- Fig. 3: zeigt ein Blockdiagramm eines Systems für ein Aggregieren von Umfelddaten aus der Sensorik für eine Spezifizierung eines Notrufs.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben.

Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

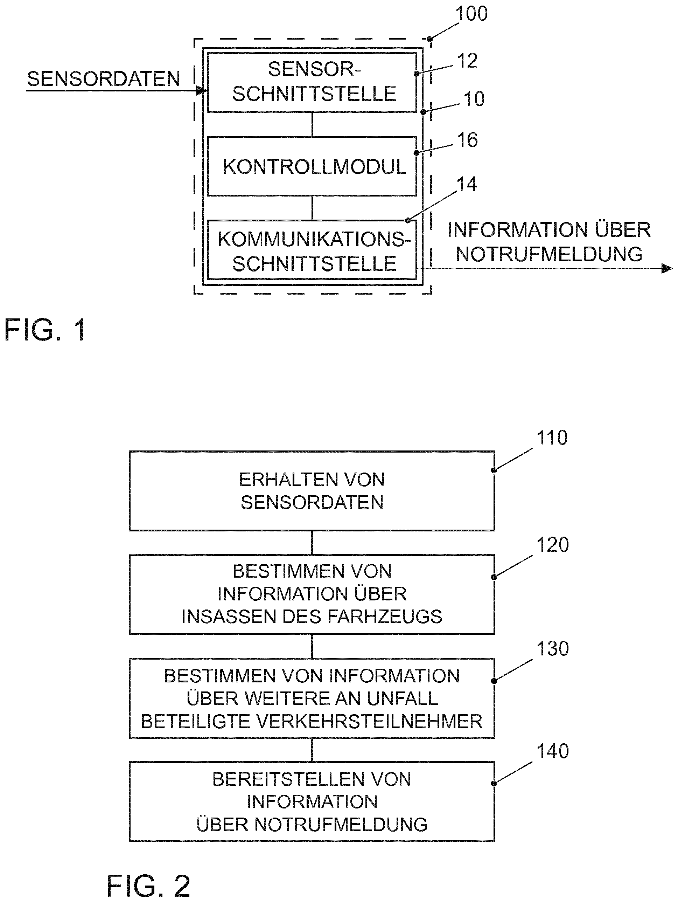

Fig. 1 zeigt ein Blockdiagramm einer Vorrichtung 10 für ein Fahrzeug 100 zum Bereitstellen einer Unfallmeldung über einen Unfall an eine Notrufstelle.

Beispielsweise kann der Unfall einem Straßenverkehrsunfall entsprechen, etwa einem Schadensereignis mit ursächlicher Beteiligung von Verkehrsteilnehmern im Straßenverkehr. Die Unfallmeldung (oder Information über die Unfallmeldung) kann beispielsweise für Rettungsdienste relevante Information über den Unfall umfassen, etwa eine voraussichtliche Anzahl von Verletzten, Anzahl und Kategorie beteiligter Verkehrsteilnehmer, eine schematische Darstellung des Unfallorts oder des Unfallhergangs und/oder eine geographische Position des Unfalls. Die Notrufstelle kann beispielsweise einer Notleitzentrale eines Rettungsdienstes, einer Polizeiwache oder eines Notdienstes entsprechen. In zumindest manchen Ausführungsbeispielen kann die Notrufstelle einem zwischengeschalteten Dienstleister entsprechen, der die Unfallmeldung an ein oder mehrere Notleitzentralen weitergibt.

Die Vorrichtung 10 umfasst zumindest eine Sensor-Schnittstelle 12, ausgebildet zum Erhalten von Sensordaten von Innensensoren und Außensensoren des Fahrzeugs 100.

Beispielsweise können die Sensordaten zumindest ein Element der Gruppe von Ultraschallsensordaten, Laufzeitsensordaten, Radarsensordaten, Nanoradarsensordaten, Laserscannersensordaten, Kamerasensordaten, Bilddaten, Beschleunigungssensordaten, Insassenschutz-Sensordaten und Fußgängerschutz-Sensordaten umfassen. Beispielsweise kann die Vorrichtung zumindest eine Teilmenge der Innensensoren und Außensensoren des Fahrzeugs umfassen. Die Innensensoren und Außensensoren des Fahrzeugs 100 können beispielsweise zumindest ein Element der Gruppe von Ultraschallsensor, Laufzeitsensor, Radarsensor, Nanoradarsensor, Laserscanner, Kamerasensor (für einen Innenraum des Fahrzeugs oder für eine Umgebung außerhalb des Fahrzeugs), Bildsensor, Beschleunigungssensor, Insassenschutz-Sensor, Sitzbelegungssensor und Fußgängerschutzsensor umfassen. Die zumindest eine Sensor-Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

Die Vorrichtung 10 umfasst ferner zumindest eine Kommunikations-Schnittstelle 14, ausgebildet zur Kommunikation mit der Notrufstelle. Die Kommunikations-Schnittstelle 14 kann beispielsweise einer Mobilfunkschnittstelle entsprechen und/oder ein Mobilfunk-Sendeempfänger-Modul umfassen. In Ausführungsbeispielen kann das Mobilfunk-Sendeempfänger-Modul typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen. Beispielsweise kann die Kommunikations-Schnittstelle 14 ausgebildet sein, über zumindest ein Mobilfunksystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution, und ein Mobilfunksystem der 5. Generation (5G) zu kommunizieren. Beispielsweise kann die Kommunikation mit der Notrufstelle zumindest teilweise eine digitale Datenübertragung umfassen, etwa über ein Kurznachrichtensystem (auch engl. Short Message System, SMS) oder über eine paketbasiertes Datenübertragungssystem, etwa über das Internet oder ein Fahrzeugherstellerspezifisches Netzwerk. In einigen Ausführungsbeispielen kann die Kommunikations-Schnittstelle 14 ausgebildet sein, über eine Fahrzeug-zu-Fahrzeug-Kommunikation über eine direkte drahtlosen Kommunikationsverbindung mit zumindest einem weiteren Fahrzeug/Verkehrsteilnehmer oder einer Verkehrsinfrastruktur zu kommunizieren (etwa ohne den Einsatz einer Basisstation) zu kommunizieren, etwa gemäß IEEE 802.11p (einem Standard des Institute of Electrical and Electronics Engineers, Institut für Elektroingenieure) oder über eine indirekte Kommunikationsverbindung (z.B. mittels eines Basisstation) zu kommunizieren. Die Kommunikations-Schnittstelle 14 kann beispielsweise ausgebildet sein, drahtlos direkt mit weiteren Fahrzeugen/Verkehrsteilnehmern in einer Umgebung zu kommunizieren.

Die Vorrichtung 10 umfasst ferner ein Kontrollmodul 16 ausgebildet zum Steuern der zumindest einen Sensor-Schnittstelle 12 (und Bewerten der Sensordaten der zumindest einen SensorSchnittstelle 12) und zum Bereitstellen von Informationen für die Kommunikations-Schnittstelle 14. Das Kontrollmodul 16 ist mit der Sensor-Schnittstelle 12 und der Kommunikations-Schnittstelle 14 gekoppelt.

Das Kontrollmodul 16 ist ausgebildet zum Bestimmen von Information über Insassen des Fahrzeugs basierend auf den Sensordaten. Beispielsweise kann das Bestimmen der Information über die Insassen des Fahrzeugs ein Bestimmen einer Anzahl der Insassen des Fahrzeugs umfassen. Beispielsweise kann das Bestimmen der Information über die Insassen des Fahrzeugs ein Bestimmen eines Zustands der Insassen des Fahrzeugs umfassen. Beispielsweise kann das Bestimmen der Information über die Insassen des Fahrzeugs eine Bestimmen einer Anzahl von verletzten Insassen des Fahrzeugs und/oder eine ein Bestimmen einer Schwere von Verletzungen der Insassen des Fahrzeugs umfassen. Beispielsweise kann die Information über die Insassen des Fahrzeugs zumindest ein Element der Gruppe von Information über eine Anzahl der Insassen des Fahrzeugs, Information über eine Anzahl von verletzten Insassen des Fahrzeugs und Information über eine Schwere von Verletzungen der Insassen des Fahrzeugs umfassen. In zumindest manchen Ausführungsbeispielen kann das Kontrollmodul 16 ferner ausgebildet sein, um zu bestimmen, ob das Fahrzeug ein anderes Fahrzeug (etwa ein Lastkraftfahrzeug) unterfahren hat zum Bestimmen der Information über die Insassen des Fahrzeugs, etwa basierend auf einer Sensor-Datenverbindung mit in einem Dachmodul des Fahrzeugs verbauten Sensoren.

Das Kontrollmodul 16 ist ferner ausgebildet zum Bestimmen von Information über weitere an dem Unfall beteiligte Verkehrsteilnehmer basierend auf den Sensordaten und basierend auf der Information über die Insassen der weiteren Verkehrsteilnehmer. Beispielsweise kann das Kontrollmodul 16 ausgebildet sein, basierend auf den Sensordaten einzelne Verkehrsteilnehmer der an dem Unfall beteiligten Verkehrsteilnehmer zu identifizieren (zu unterscheiden), und die Information über die weiteren an dem Unfall beteiligten Verkehrsteilnehmern basierend auf den identifizierten (unterschiedenen) Verkehrsteilnehmern zu bestimmen. Beispielswiese kann das Kontrollmodul 16 ausgebildet sein, um zu unterschieden, ob ein basierend auf den Sensordaten erkannter Verkehrsteilnehmer an dem Unfall beteiligt ist. Beispielsweise kann das Kontrollmodul 16 ausgebildet sein, einen basierend auf den Sensordaten erkannten Verkehrsteilnehmer für die Information über die weiteren an dem Unfall beteiligten Verkehrsteilnehmer einzubeziehen, wenn basierend auf den Sensordaten ein Schaden an dem Verkehrsteilnehmer zu erkennen oder anzunehmen ist.

Beispielsweise können die Sensordaten Bilddaten eines Außen-Kamerasensors des Fahrzeugs 100 umfassen. Das Kontrollmodul 16 kann ausgebildet sein, um basierend auf einer Objekterkennung in den Bilddaten zumindest einen Teil der weiteren an dem Unfall beteiligten Verkehrsteilnehmer zu erkennen. Das Kontrollmodul 16 ist ausgebildet, die weiteren an dem Unfall beteiligten Verkehrsteilnehmer basierend auf der Objekterkennung in eine Mehrzahl von Kategorien einzuordnen. Beispielsweise kann das Kontrollmodul 16 ausgebildet sein, anhand einer Mustererkennung die weiteren an dem Unfall beteiligten Verkehrsteilnehmer in die Mehrzahl von Kategorien einzuordnen. Das Kontrollmodul 16 ist ausgebildet, über die Kommunikations-Schnittstelle Information über eine Identifikation zumindest eines der an dem Unfall beteiligten Verkehrsteilnehmer zu erhalten ( per direkter Fahrzeug-zu-Fahrzeug-Kommunikation), und das Kontrollmodul 16 ist ferner ausgebildet, die weiteren an dem Unfall beteiligten Verkehrsteilnehmer basierend auf der Information über die Identifikation in die Mehrzahl von Kategorien einzuordnen. Ferner kann das Kontrollmodul 16 ausgebildet sein, die Ihm zur Verfügung gestellten möglicherweise variierenden Sensordaten der Sensorschnittstelle plausibilisieren und beispielsweise nur relevante und valide Informationen der Kommunikations-Schnittstelle 14 zur Verfügung zu stellen. Beispielsweise kann das Kontrollmodul 16 ausgebildet sein, um die Sensordaten vor einer Weiterverarbeitung (etwa zum Bestimmen der Information über die Insassen des Fahrzeugs oder zum Bestimmen der Information über die weiteren an dem Unfall beteiligten Verkehrsteilnehmer) zu plausibilisieren. Beispielsweise kann das Kontrollmodul 16 ausgebildet sein, unplausible Sensordaten von der Weiterverarbeitung auszuschließen.

Die Information über die weiteren an dem Unfall beteiligten Verkehrsteilnehmer ist in die Mehrzahl von Kategorien unterteilt. Die Mehrzahl von Kategorien umfasst zumindest die Kategorien Fußgänger, Zweiräder und Automobile. Das Kontrollmodul 16 ist ausgebildet, die weiteren an dem Unfall beteiligten Verkehrsteilnehmer in die Mehrzahl von Kategorien einzuordnen oder gemäß der Mehrzahl von Kategorien zu klassifizieren. Die Mehrzahl von Kategorien kann ferner die Kategorien Lastkraftfahrzeuge und Personenkraftfahrzeuge umfassen. Beispielsweise kann die Mehrzahl von Kategorien ferner zumindest ein Element der Gruppe von Schwere des Unfalls/einer Verletzung und Art des Unfalls/der Verletzung umfassen. Beispielsweise können Kategorien der Mehrzahl von Kategorien Unterkategorien umfassen. Beispielsweise kann die Kategorie Zweiräder die Unterkategorien Krafträder und Fahrräder umfassen, und die Kategorie Automobile kann die Kategorien Lastkraftfahrzeuge und Personenkraftfahrzeuge umfassen. Alternativ nehmen alle Kategorien die gleiche Hierarchieebene ein. Beispielsweise kann die Information über die weiteren an dem Unfall beteiligten Verkehrsteilnehmer Information über eine geschätzte Anzahl verletzter oder hilfsbedürftiger Verkehrsteilnehmer umfassen. Beispielsweise kann die Information über die geschätzte Anzahl verletzter oder hilfsbedürftiger Verkehrsteilnehmer Information über eine geschätzte Schwere der Verletzungen oder der Hilfebedürfnisse der Verkehrsteilnehmer umfassen.

Erfingungsgemäß ist die zumindest eine Kommunikations-Schnittstelle 14 ferner zu einer Fahrzeug-zu-Fahrzeug-Kommunikation mit zumindest einem Teil der weiteren Verkehrsteilnehmer ausgebildet. Das Kontrollmodul ist ausgebildet, um über Fahrzeug-zu-Fahrzeug-Kommunikation Information über Insassen der weiteren Verkehrsteilnehmer zu erhalten (etwa von dem zumindest einem Teil der weiteren Verkehrsteilnehmer oder von einem Fahrzeug oder einer Verkehrsinfrastruktur, die ausgebildet sind, die Information über die weiteren Verkehrsteilnehmer zu aggregieren). Das Kontrollmodul 16 ist ausgebildet, um die Information über die weiteren an dem Unfall beteiligten Verkehrsteilnehmer basierend auf der Information über die Insassen der weiteren Verkehrsteilnehmer zu bestimmen. Beispielsweise kann die Information über die Insassen der weiteren Verkehrsteilnehmer zumindest Information über eine Anzahl der Insassen der weiteren Verkehrsteilnehmer umfassen. Zusätzlich (oder alternativ) kann die Information über die Insassen der weiteren Verkehrsteilnehmer Information über Verletzungen der Insassen der weiteren Verkehrsteilnehmer umfassen.

In zumindest manchen Ausführungsbeispielen kann das Kontrollmodul 16 ferner ausgebildet sein, um weitere Sensordaten (etwa über Fahrzeug-zu-Fahrzeug-Kommunikation) von dem zumindest einen Teil der weiteren Verkehrsteilnehmer zu erhalten. Das Kontrollmodul 16 kann ausgebildet sein, um die Information über die weiteren an dem Unfall beteiligten Verkehrsteilnehmer basierend auf den weiteren Sensordaten zu bestimmen. Beispielsweise kann das Kontrollmodul 16 ausgebildet sein, um die Information über die weiteren an dem Unfall beteiligten Verkehrsteilnehmer basierend auf einer Kombination der Sensordaten und der weiteren Sensordaten zu bestimmen. Alternativ kann das Kontrollmodul 16 ausgebildet sein, um die Information über die weiteren an dem Unfall beteiligten Verkehrsteilnehmer basierend auf den weiteren Sensordaten zu bestimmen, falls für einen Teilbereich der Unfallstelle keine Daten in den Sensordaten umfasst ist. Zusätzlich oder alternativ kann das Kontrollmodul 16 ausgebildet sein, um die Sensordaten basierend auf den weiteren Sensordaten zu verifizieren zum Bestimmen der Information über die weiteren an dem Unfall beteiligten Verkehrsteilnehmer.

Erfindungsgemäß ist das Kontrollmodul 16 ausgebildet, die Information über die Unfallmeldung basierend auf de bestimmten Information über die Insassen des Fahrzeugs und basierend auf der bestimmten Information über die weiteren an dem Unfall beteiligte Verkehrsteilnehmer anhand von Sensordaten und Informationen über die Insassen der am Unfall beteiligten Fremdfahrzeuge bereitzustellen. Die Information über die Unfallmeldung umfasst zumindest Teile der Information über die Insassen des Fahrzeugs und/oder Teile der Information über die weiteren an dem Unfall beteiligten Verkehrsteilnehmer, kategorisiert gemäß der Mehrzahl von Kategorien. Beispielsweise kann die Information über die Unfallmeldung Information über eine (geschätzte) Anzahl der an dem Unfall beteiligten Verkehrsteilnehmer und/oder Information über eine (geschätzte) Anzahl von Insassen der an dem Unfall beteiligten Verkehrsteilnehmer umfassen, etwa basierend auf oder aufgeilt auf die Mehrzahl von Kategorien. Beispielsweise kann das Kontrollmodul 16 ausgebildet sein, die Information über die Unfallmeldung als ein oder mehrere Kurznachrichten (SMS) oder als ein oder mehrere (verschlüsselte) Datenpakete an die Notrufstelle zu übermitteln. Beispielsweise kann die Information über die Unfallmeldung in einem erweiterten Datensatz (engl. Extended Set of Data, ESD) oder in einem Basisdatensatz (engl. MinimumSet of Data, MSD) und dem erweiterten Datensatz einer digitalen Unfallmeldung umfasst sein. Alternativ oder zusätzlich kann das Kontrollmodul 16 ausgebildet sein, die Information über die Unfallmeldung über eine direkte Fahrzeug-zu-Infrastruktur-Kommunikation einer Verkehrsinfrastruktur bereitzustellen, oder über eine Fahrzeug-zu-X-Kommunikation (engl. Car2X) an weitere Fahrzeuge (etwa Rettungsfahrzeuge) und Verkehrsinfrastruktur gleichermaßen zu übermitteln.

In zumindest manchen Ausführungsbeispielen kann das Kontrollmodul 16 ausgebildet sein, um basierend auf den Sensordaten einen bevorstehenden Aufprall zu erkennen. Beispielsweise kann das Kontrollmodul 16 ausgebildet sein, basierend auf Laufzeitsensordaten (etwa Radardaten, Lidardaten, oder akustischen Laufzeitsensordaten) den bevorstehenden Aufprall zu erkennen. Beispielsweise kann das Kontrollmodul 16 ausgebildet sein, den bevorstehenden Aufprall basierend auf einem Pre-Crash-System (Vor-Zusammenstoß-System) des Fahrzeugs 100 zu erkennen. Beispielsweise kann das Kontrollmodul 16 ausgebildet sein, um basierend auf Information über eine Time To Crash (TTC, engl. für Zeit bis zu einem Aufprall) den bevorstehenden Aufprall zu erkennen.

Das Kontrollmodul 16 kann ausgebildet sein, um die Sensordaten basierend auf dem bevorstehenden Aufprall zwischenzuspeichern. Beispielsweise kann das Kontrollmodul 16 ausgebildet sein, um die Sensordaten in einem Ringspeicher, einer Ringspeicher-Datenstruktur oder einem FIFO-Speicher zwischenzuspeichern. Beispielsweise kann das Kontrollmodul 16 ausgebildet sein, die Information über die weiteren an dem Unfall beteiligten Verkehrsteilnehmer basierend auf den zwischengespeicherten Sensordaten zu bestimmen. Beispielsweise kann das Kontrollmodul 16 ausgebildet sein, um die Information über die weiteren an dem Unfall beteiligte Verkehrsteilnehmer basierend auf Sensordaten, die vor dem Aufprall erhalten wurden, zu bestimmen. Beispielsweise können die zwischengespeicherten Sensordaten zumindest ein Element der Gruppe von Information über eine Trajektorie des Fahrzeugs oder der weiteren an dem Unfall beteiligen Verkehrsteilnehmer, Information über eine Geschwindigkeit des Fahrzeugs oder der weiteren an dem Unfall beteiligen Verkehrsteilnehmer, Information über eine Art/Typ/Kategorisierung der weiteren an dem Unfall beteiligten Verkehrsteilnehmer und Information über einen zeitlichen Verlauf des Unfalls umfassen. Beispielsweise kann das Kontrollmodul 16 ausgebildet sein, die zwischengespeicherten Sensordaten für die Information über die Unfallmeldung zu verarbeiten, etwa in ein Format zur Datenübertragung zu überführen. Beispielsweise kann das Kontrollmodul 16 ausgebildet sein, die Information über die weiteren an dem Unfall beteiligten Verkehrsteilnehmer lediglich basierend auf Sensordaten zu bestimmen, die vor dem Aufprall erhalten oder von den Innensensoren oder den Außensensoren vor dem Aufprall ermittelt wurden. Alternativ kann das Kontrollmodul 16 ausgebildet sein, die Information über die weiteren an dem Unfall beteiligten Verkehrsteilnehmer basierend auf den (vor dem Unfall ermittelten) zwischengespeicherten Sensordaten und (während oder nach dem Aufprall ermittelten) aktuellen Sensordaten zu bestimmen. Beispielsweise kann das Kontrollmodul 16 ausgebildet sein, Sensordaten, die vor dem Aufprall ermittelt wurden, beim Bestimmen der Information über die weiteren an dem Unfall beteiligten Verkehrsteilnehmer eine höhere Priorität oder Zuverlässigkeit zuzuweisen als Sensordaten, die nach dem Aufprall ermittelt werden. Des weiteren können Informationen zwischengespeichert werden, welche den Unfallhergang spezifizieren. Beispielsweise kann die Trajektorie (Bahnkurve), Geschwindigkeit und Art der Unfallteilnehmer über den zeitlichen Verlauf festgehalten werden und in eine für die Versendung vorgesehenes Format überführt werden.

In zumindest einigen Ausführungsbeispielen können die Sensordaten Bilddaten eines Außen-Kamerasensors des Fahrzeugs 100 umfassen. Das Kontrollmodul 16 kann ausgebildet sein, um die Information über die Unfallmeldung basierend auf den Bilddaten (anonymisiert) bereitzustellen. Die Information über die Unfallmeldung kann eine schematische (etwa anonymisierte) Darstellung des Unfalls basierend auf den Bilddaten umfassen. Beispielsweise kann das Kontrollmodul 16 ausgebildet sein, um die Information über die Unfallmeldung mit der schematischen Darstellung des Unfalls nicht basierend auf Sensordaten, die Radar- und Laserscanner-basiert sind, bereitzustellen, sondern kann ausgebildet sein, die Information über die Unfallmeldung mit der schematischen Darstellung zusätzlich auf Bilddaten des Außen-Kamerasensors zu bestimmen. Beispielsweise kann die schematische Darstellung des Unfalls einer vektorbasierten Darstellung des Unfalls entsprechen. Beispielsweise können das Fahrzeug und/oder die weiteren an dem Unfall beteiligten Verkehrsteilnehmer als (dreidimensionale) Polygone oder als einzelne Koordinaten in einem Koordinatensystem umfasst sein. Alternativ kann die schematische Darstellung des Unfalls ein fotografisches Abbild der Unfallstelle umfassen, bei dem zumindest die weiteren an dem Unfall beteiligten Verkehrsteilnehmer als schematische Darstellung umfasst sind (etwa als Dummy-Darstellung). Die schematische Darstellung der weiteren an dem Unfall beteiligten Verkehrsteilnehmer kann von einer (geschätzten) Schwere einer Beschädigung oder Verletzung der weiteren an dem Unfall beteiligten Verkehrsteilnehmer abhängen. Beispielsweise kann das Bereitstellen der schematischen Darstellung des Unfalls von einer Jurisdiktion, in der sich das Fahrzeug befindet, abhängig sein. Beispielsweise kann das Kontrollmodul 16 ausgebildet sein, das Bereitstellen der schematischen Darstellung des Unfalls basierend auf der Jurisdiktion, in der sich das Fahrzeug befindet, anzupassen. Je nach Jurisdiktion kann die schematische Darstellung des Unfalls unterschiedliche (etwa mehr oder weniger) Informationen umfassen oder unterschiedlich stark schematisiert sein (etwa durch Überführung in eine Darstellung von Objekten), oder je nach Jurisdiktion kann die schematische Darstellung des Unfalls übertragen werden (oder nicht).

In Ausführungsbeispielen kann das Kontrollmodul 16 einem beliebigen Controller oder Prozessor oder einer programmierbaren Hardwarekomponente entsprechen. Beispielsweise kann das Kontrollmodul 16 auch als Software realisiert sein, die für eine entsprechende Hardwarekomponente programmiert ist. Insofern kann das Kontrollmodul 16 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16 denkbar. Fig. 2 zeigt ein Flussdiagramm eines (entsprechenden) Verfahrens für ein Fahrzeug 100 zum Bereitstellen einer Unfallmeldung über einen Unfall an eine Notrufstelle. Beispielsweise kann die Vorrichtung 10 (etwa das Kontrollmodul 16 der Vorrichtung 10) gemäß Fig. 1 ausgebildet sein, um das Verfahren auszuführen. Das Verfahren umfasst Erhalten 110 von Sensordaten von Innensensoren und Außensensoren des Fahrzeugs 100 und Erhalten, über Fahrzeug-zu-Fahrzeug-Kommunikation, von Information über eine Identifikation zumindest eines der weiteren an dem Unfall beteiligten Verkehrsteilnehmer. Das Verfahren umfasst ferner Bestimmen 120 von Information über Insassen des Fahrzeugs basierend auf den Sensordaten. Das Verfahren umfasst ferner Bestimmen 130 von Information über weitere an dem Unfall beteiligte Verkehrsteilnehmer basierend auf den Sensordaten und basierend auf der Information über die Identifikation zumindest eines der weiteren an dem Unfall beteiligten Verkehrsteilnehmer. Die Information über die weiteren an dem Unfall beteiligten Verkehrsteilnehmer ist in eine Mehrzahl von Kategorien unterteilt. Die Mehrzahl von Kategorien umfasst zumindest die Kategorien Fußgänger, Zweiräder und Automobile. Das Verfahren umfasst ferner Bereitstellen 140 von Information über die Unfallmeldung basierend auf der bestimmten Information über die Insassen des Fahrzeugs und basierend auf der bestimmten Information über die weiteren an dem Unfall beteiligte Verkehrsteilnehmer, kategorisiert gemäß der Mehrzahl von Kategorien.

Mehr Details und Aspekte des Verfahrens werden in Verbindung mit dem Konzept oder Beispielen genannt, die vorher (z.B. Fig. 1) beschrieben wurden. Das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Zumindest manche Ausführungsbeispiele schaffen ein kommerzielles Notrufsignal mit zusätzlichen Unfall/Aufprall-Information über Fahrerassistenzsysteme (auch engl: Commercial SOS: Additional Crash Information via Driver Assistance Systems).

Bei einem automatischen Notruf wird einem CallCenter (oder Rettungsleitstelle) eine Anzahl der Insassen genannt, um die Anzahl der Unfallteilnehmer abzuschätzen. In diesem Fall profitieren nur die Insassen, welche durch das Notrufsystem detektiert wurden. Andere Unfallteilnehmer bleiben bei der Unfallmeldung außen vor. In zumindest manchen Ausführungsbeispielen können auch andere Unfallteilnehmer profitieren, etwa dadurch, dass eine adäquate Anzahl und die richtigen Rettungskräfte zur Unfallstelle erscheinen und bereits informiert sind.

Aus einer aggregierten Datenfusion der Sensorik können beispielsweise andere Unfallteilnehmer ermittelt und klassifiziert werden (etwa nach Anzahl, Typ, Schwere des Unfalls, Art des Unfalls...) und der Rettungsleitstellte (TSP, Telematic Speaking Point, ein Call Center für Notrufe) übermittelt werden.

Die Datenfusion kann von Sensoren wie Ultraschall, Radar, Nanoradar, Laserscanner, Kamera (etwa über Objekteerkennung), Car2X (Fahrzeug-zu-Fahrzeug/Fahrzeug-zu-Infrastruktur-Kommunikation) Daten (optional) uvm. gespeist werden. Ein Kontrollmodul kann ausgebildet sein, die relevanten Objekte, welche zur Kollision kommen, zu ermitteln, und diese zu klassifizieren in Zweiradfahrer, PKW, LKW, Fußgänger... (in die Mehrzahl von Kategorien).Optional können auch Daten von Trajektorien, Ego-Daten, sowie weitere Fahrzeugdaten der Unfallteilnehmer ermittelt werden.

Über Car2X können auch weitere Daten der anderen Unfallteilnehmer abgerufen und übertragen werden wie z.B. Anzahl der dortigen Insassen, Schwere des Unfalls, Anzahl und Art der mit Ihnen kollidierten Fahrzeuge, Ego (Daten des eigenen Fahrzeugs) bzw. Targetdaten (Zielfahrzeugdaten).

Die aggregierten Informationen können dem Notrufmodul zur Verfügung gestellt werden. Per Datentransfer kann die Leitstelle (TSP, Call Center) gespeist werden. Die empfangenen Daten können beispielsweise in einer GUI (in einer grafischen Benutzeroberfläche, engl. Graphical User Interface) bzw. in einer kurzen anonymisierten 3D Simulation automatisch aufbereitet werden und dem Agent oder den Rettungskräften vorgespielt werden. Das Verfahren kann zum "Schutz nach außen gesichert" werden.

Das Wissen (Anzahl, Art, Insassen, Ego/Tagetdaten,...) bei einem Unfall um andere Verkehrsteilnehmer, welche durch die aggregierte Nutzung von Sensordaten entstanden sind, sowie die aufbereitete und geschützte Bereitstellung dieser gegenüber einer Rettungsleitstelle (Call Center, TSP, Einsatzkräfte), kann einen gezielteren Einsatz von Rettungskräften ermöglichen.

Bei einem Unfall kann die Rettungsleitstelle jedem Unfallteilnehmer die nötigen und vorab informierten Rettungskräfte schicken. Dabei können die genutzten Daten anonymisiert und gegebenenfalls verschlüsselt sein. Eine Übermittlung von Kamerabildern (intern wie extern) an die Rettungsleitstelle (rundum) kann gemäß lokalen rechtlichen Vorgaben der Jurisdiktion, in der sich das Fahrzeug befindet, erfolgen.

Beispielsweise können die (Sensor-)Daten schon vor einem Unfall vorhanden sein, etwa durch TTC (Time To Collision, Zeit bis Aufprall)-Berechnungen der PreCrash (Vor-Aufprall) Funktionen; diese können somit auch bei einem schweren Unfall dem Notrufmodul vorliegen.

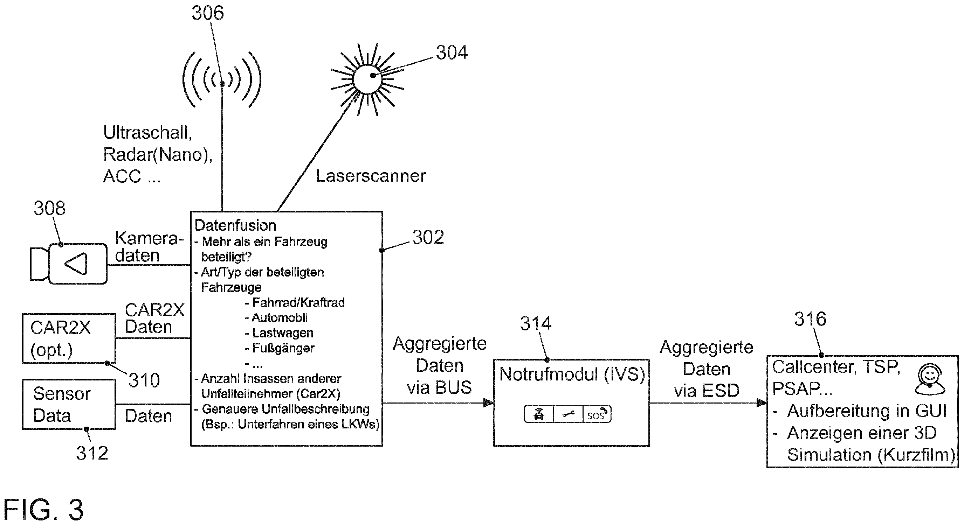

Fig. 3 zeigt ein Blockdiagramm eines beispielhaften Ausführungsbeispiels eines Systems für ein Aggregieren von Umfelddaten aus der Sensorik für eine Spezifizierung eines Notrufs. Das System umfasst ein Kontrollmodul 302, ausgebildet zu einer Datenfusion von Sensordaten. Beispielsweise kann das Kontrollmodul 302 ausgebildet sein, um Sensordaten von einem Laserscanner 304, von einem Laufzeitsystem (Ultraschall, Radar(Nano), Adaptiver Tempomat (auch engl. Adaptive Cruise Control, ACC) 306, von einer Kamera 308, über ein Car2X-System 310 oder weitere Sensordaten 312 für die Datenfusion zu erhalten. Darauf basierend kann das Kontrollmodul 302 ausgebildet sein, um die relevanten Unfallteilnehmer/Objekte zu erkennen, und die aggregierten Daten über einen Datenbus an ein Notrufmodul 314 weiterzugeben. Ebenso kann das Kontrollmodul 302 in der Lage sein, keine weiteren relevanten Unfallteilnehmer/Objekte (ausser dem eigenen Fahrzeug) weiterzugeben. Das Notrufmodul 314 kann ausgebildet sein, um die aggregierten Daten (Information über den Notruf) einer Notrufstelle 316, etwa einem Call-Center, einem Telematic Speaking Point oder einem Public Safety Answering Point (PSAP, ein Notruf-Call-Center), bereitzustellen. Beispielsweise kann das Kontrollmodul 302 dem Kontrollmodul 16, das in Verbindung mit Fig. 1 vorgestellt wurde, entsprechen. Das Notrufmodul 314 kann der Kommunikations-Schnittstelle 14 aus Fig. 1 entsprechen.

Kundenerlebnis:
▪ Ein Rettungswagen kann beispielsweise nicht nur für einen Unfallteilnehmer ausgesandt werden (im Zweifel kann etwa eine Erstbehandlung nicht beim Kunden erfolgen)
▪ Spezialisten für etwaige Unfallsituation (Motorrad, LKW) können gerufen werden

Funktionsbeschreibung:
▪ Fusionierung von Informationen aus der Sensorik (kann etwa in zentralen Modul/Steuergerät vorhanden sein)
▪ Ermittlung der relevanten Unfallteilnehmer bzw. Objekten (kann etwa aus PreCrash-Funktionen gewonnen werden)
▪ Bereitstellung (evtl. verschlüsselt) der Informationen über Notrufmodul (etwa ein In-Vehicle-System, In-Fahrzeug-System)
▪ an TSP und somit Verknüpfung der Sensorinformationen mit den Rettungskräften

In der Datenfusion können beispielsweise folgende Aspekte geprüft werden:
▪ Mehr als ein Fahrzeug beteiligt?
▪ Art/Typ der beteiligten Fahrzeuge
   ∘ Fahrrad/Motorrad
   ∘ Auto
   ∘ LKW
   ∘ Fußgänger
   ∘ ...
▪ Anzahl Insassen anderer Unfallteilnehmer (Car2X)
▪ Genauere Unfallbeschreibung (Bsp.: Unterfahren eines LKWs)

Mehr Details und Aspekte des Systems werden in Verbindung mit dem Konzept oder Beispielen genannt, die vorher (z.B. Fig. 1 und 2) beschrieben wurden. Das System kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Sensor-Schnittstelle
- 14: Kommunikations-Schnittstelle
- 16: Kontrollmodul
- 100: Fahrzeug
- 110: Erhalten von Sensordaten
- 120: Bestimmen von Information über Insassen des Fahrzeugs
- 130: Bestimmen von Information über weitere an Unfälle beteiligte Verkehrsteilnehmer
- 140: Bereitstellen von Information über Notrufmeldung
- 302: Kontrollmodul
- 304: Laserscanner
- 306: Laufzeitsystem
- 308: Kamera
- 310: Car2X-System
- 312: Weitere Sensordaten
- 314: Notrufmodul
- 316: Notrufstelle

## Patentansprüche

1. Vorrichtung (10) für ein Fahrzeug (100) zum Bereitstellen einer Unfallmeldung über einen Unfall an eine Notrufstelle, die Vorrichtung (10) umfassend
zumindest eine Sensor-Schnittstelle (12), ausgebildet zum Erhalten von Sensordaten von Innensensoren und Außensensoren des Fahrzeugs (100);
zumindest eine Kommunikations-Schnittstelle (14), ausgebildet zur Kommunikation mit der Notrufstelle und zur Fahrzeug-zu-Fahrzeug-Kommunikation mit zumindest einem Teil von weiteren Verkehrsteilnehmern; und
ein Kontrollmodul (16), ausgebildet zum:
Steuern der zumindest einen Sensor-Schnittstelle (12) und der Kommunikations-Schnittstelle (14),
Bestimmen von Information über Insassen des Fahrzeugs (100) basierend auf den Sensordaten, Erkennen, basierend auf einer Objekterkennung in den Sensordaten, zumindest eines Teils der weiteren an dem Unfall beteiligten Verkehrsteilnehmer,
Erhalten, über Fahrzeug-zu-Fahrzeug-Kommunikation, von Information über eine Identifikation zumindest eines der weiteren an dem Unfall beteiligten Verkehrsteilnehmer,
Bestimmen von Information über die weiteren an dem Unfall beteiligten Verkehrsteilnehmer basierend auf der Objekterkennung und basierend auf der Identifikation des zumindest einen weiteren an dem Unfall beteiligten Verkehrsteilnehmers, unterteilt in eine Mehrzahl von Kategorien, wobei die Mehrzahl von Kategorien zumindest die Kategorien Fußgänger, Zweiräder und Automobile umfasst, und
Bereitstellen von Information über die Unfallmeldung über die Kommunikations-Schnittstelle (14) basierend auf der bestimmten Information über die Insassen des Fahrzeugs und
basierend auf der bestimmten Information über die weiteren an dem Unfall beteiligten Verkehrsteilnehmer, kategorisiert gemäß der Mehrzahl von Kategorien.

2. Die Vorrichtung (10) gemäß Anspruch 1, wobei das Kontrollmodul (16) ausgebildet ist, basierend auf den Sensordaten einen bevorstehenden Aufprall zu erkennen, und wobei das Kontrollmodul (16) ausgebildet ist, die Sensordaten basierend auf dem bevorstehenden Aufprall zwischenzuspeichern.

3. Die Vorrichtung (10) gemäß einem der vorhergehenden Ansprüche, wobei das Kontrollmodul (16) ausgebildet ist, basierend auf den Sensordaten einen bevorstehenden Aufprall zu erkennen, und die Information über die weiteren an dem Unfall beteiligte Verkehrsteilnehmer basierend auf Sensordaten, die vor dem Aufprall erhalten wurden, zu bestimmen.

4. Die Vorrichtung (10) gemäß einem der vorhergehenden Ansprüche, wobei die Information über die Insassen der weiteren Verkehrsteilnehmer Information über Verletzungen der Insassen der weiteren Verkehrsteilnehmer umfasst.

5. Die Vorrichtung (10) gemäß einem der vorhergehenden Ansprüche, wobei das Kontrollmodul (16) ausgebildet ist, weitere Sensordaten von dem zumindest einen Teil der weiteren Verkehrsteilnehmer zu erhalten, und wobei das Kontrollmodul (16) ausgebildet ist, die Information über die weiteren an dem Unfall beteiligten Verkehrsteilnehmer basierend auf den weiteren Sensordaten zu bestimmen.

6. Die Vorrichtung (10) gemäß einem der vorhergehenden Ansprüche, wobei die Sensordaten Bilddaten eines Außen-Kamerasensors des Fahrzeugs (100) umfassen, wobei das Kontrollmodul (16) ausgebildet ist, die Information über die Unfallmeldung basierend auf den Bilddaten bereitzustellen, wobei die Information über die Unfallmeldung eine schematische Darstellung des Unfalls basierend auf den Bilddaten umfasst.

7. Verfahren für ein Fahrzeug (100) zum Bereitstellen einer Unfallmeldung über einen Unfall an eine Notrufstelle, das Verfahren umfassend
Erhalten (110) von Sensordaten von Innensensoren und Außensensoren des Fahrzeugs (100);
Bestimmen (120) von Information über Insassen des Fahrzeugs (100) basierend auf den Sensordaten,
Erkennen, basierend auf einer Objekterkennung in den Sensordaten, zumindest eines Teils der weiteren an dem Unfall beteiligten Verkehrsteilnehmer,
Erhalten, über Fahrzeug-zu-Fahrzeug-Kommunikation, von Information über eine Identifikation zumindest eines der weiteren an dem Unfall beteiligten Verkehrsteilnehmer,
Bestimmen (130) von Information über die weiteren an dem Unfall beteiligten Verkehrsteilnehmer basierend auf der Objekterkennung und basierend auf der Identifikation des zumindest einen weiteren an dem Unfall beteiligten Verkehrsteilnehmers, unterteilt in eine Mehrzahl von Kategorien,
wobei die Mehrzahl von Kategorien zumindest die Kategorien Fußgänger, Zweiräder und Automobile umfasst; und
Bereitstellen (140) von Information über die Unfallmeldung basierend auf der bestimmten Information über die Insassen des Fahrzeugs und basierend auf der bestimmten Information über die weiteren an dem Unfall beteiligte Verkehrsteilnehmer, kategorisiert gemäß der Mehrzahl von Kategorien.

8. Programm mit einem Programmcode zum Durchführen des Verfahrens gemäß Anspruch 7, wenn der Programmcode auf einem Computer, einem Prozessor, einem Kontrollmodul oder einer programmierbaren Hardwarekomponente ausgeführt wird.

## Claims

1. Apparatus (10) for a vehicle (100) for providing an accident report about an accident to an emergency call centre, the apparatus (10) comprising at least one sensor interface (12), designed to obtain sensor data from interior sensors and exterior sensors of the vehicle (100);
at least one communication interface (14), designed for communication with the emergency call centre and for vehicle-to-vehicle communication with at least some of other road users; and
a control module (16), designed to:
control the at least one sensor interface (12) and the communication interface (14),
determine information about occupants of the vehicle (100) on the basis of the sensor data,
detect, on the basis of an object detection in the sensor data, at least some of the other road users involved in the accident,
obtain, by means of vehicle-to-vehicle communication, information about an identification of at least one of the other road users involved in the accident,
determine information about the other road users involved in the accident on the basis of the object detection and on the basis of the identification of the at least one other road user involved in the accident, divided into a plurality of categories,
the plurality of categories including at least the categories pedestrians, bikes and automobiles,
and
provide information about the accident report by means of the communication interface (14) on the basis of the determined information about the occupants of the vehicle and on the basis of the determined information about the other road users involved in the accident, categorized in accordance with the plurality of categories.

2. Apparatus (10) according to Claim 1, wherein the control module (16) is designed to detect an imminent impact on the basis of the sensor data, and wherein the control module (16) is designed to buffer-store the sensor data on the basis of the imminent impact.

3. Apparatus (10) according to either of the preceding claims, wherein the control module (16) is designed to detect an imminent impact on the basis of the sensor data and to determine the information about the other road users involved in the accident on the basis of sensor data that were obtained before the impact.

4. Apparatus (10) according to one of the preceding claims, wherein the information about the occupants of the other road users includes information about injuries to the occupants of the other road users.

5. Apparatus (10) according to one of the preceding claims,
wherein the control module (16) is designed to obtain further sensor data from the at least some of the other road users, and wherein the control module (16) is designed to determine the information about the other road users involved in the accident on the basis of the further sensor data.

6. Apparatus (10) according to one of the preceding claims, wherein the sensor data include image data from an exterior camera sensor of the vehicle (100), the control module (16) being designed to provide the information about the accident report on the basis of the image data, the information about the accident report including a schematic representation of the accident on the basis of the image data.

7. Method for a vehicle (100) for providing an accident report about an accident to an emergency call centre, the method comprising
obtaining (110) sensor data from interior sensors and exterior sensors of the vehicle (100);
determining (120) information about occupants of the vehicle (100) on the basis of the sensor data, detecting, on the basis of an object detection in the sensor data, at least some of the other road users involved in the accident,
obtaining, by means of vehicle-to-vehicle communication, information about an identification of at least one of the other road users involved in the accident,
determining (130) information about the other road users involved in the accident on the basis of the object detection and on the basis of the identification of the at least one other road user involved in the accident, divided into a plurality of categories,
the plurality of categories including at least the categories pedestrians, bikes and automobiles;
and
providing (140) information about the accident report on the basis of the determined information about the occupants of the vehicle and on the basis of the determined information about the other road users involved in the accident, categorized in accordance with the plurality of categories.

8. Program containing a program code for carrying out the method according to Claim 7 when the program code is executed on a computer, a processor, a control module or a programmable hardware component.

## Revendications

1. Dispositif (10) pour un véhicule (100) destiné à fournir un signalement d'accident à propos d'un accident à un centre d'appel d'urgence, le dispositif (10) comprenant
au moins une interface de capteur (12), configurée pour obtenir des données de capteur en provenance de capteurs internes et de capteurs externes du véhicule (100) ;
au moins une interface de communication (14), configurée pour la communication avec le centre d'appel d'urgence et pour la communication de véhicule à véhicule avec au moins une partie d'autres acteurs de la circulation ; et un module de contrôle (16), configuré pour :
commander l'au moins une interface de capteur (12) et l'interface de communication (14),
déterminer des informations à propos des occupants du véhicule (100) en se basant sur les données de capteur, reconnaître, en se basant sur une reconnaissance d'objet dans les données de capteur, au moins une partie des autres acteurs de la circulation impliqués dans l'accident,
obtenir, par le biais de la communication de véhicule à véhicule, des informations à propos d'une identification d'au moins l'un des autres acteurs de la circulation impliqués dans l'accident,
déterminer des informations à propos des autres acteurs de la circulation impliqués dans l'accident en se basant sur la reconnaissance d'objet et en se basant sur l'identification de l'au moins un autre acteur de la circulation impliqué dans l'accident, divisé en une pluralité de catégories,
la pluralité de catégories comprenant au moins les catégories piéton, deux-roues et automobile,
et
fournir des informations à propos du signalement d'accident par le biais de l'interface de communication (14) en se basant sur les informations déterminées à propos des occupants du véhicule et en se basant sur les informations déterminées à propos des autres acteurs de la circulation impliqués dans l'accident, catégorisés en fonction de la pluralité de catégories.

2. Dispositif (10) selon la revendication 1, le module de contrôle (16) étant configuré pour reconnaître une collision imminente, et le module de contrôle (16) étant configuré pour mémoriser temporairement les données de capteur en se basant sur la collision imminente.

3. Dispositif (10) selon l'une des revendications précédentes, le module de contrôle (16) étant configuré pour reconnaître une collision imminente en se basant sur les données de capteur et pour déterminer les informations à propos des autres acteurs de la circulation impliqués dans l'accident en se basant sur les données de capteur qui ont été obtenues avant la collision.

4. Dispositif (10) selon l'une des revendications précédentes, les informations à propos des occupants des autres acteurs de la circulation comprenant des informations à propos des blessures des occupants des autres acteurs de la circulation.

5. Dispositif (10) selon l'une des revendications précédentes, le module de contrôle (16) étant configuré pour obtenir des données de capteur supplémentaires de l'au moins une partie des autres acteurs de la circulation, et le module de contrôle (16) étant configuré pour déterminer les informations à propos des autres acteurs de la circulation impliqués dans l'accident en se basant sur les données de capteur supplémentaires.

6. Dispositif (10) selon l'une des revendications précédentes, les données de capteur comprenant des données d'image d'un capteur à caméra extérieur du véhicule (100), le module de commande (16) étant configuré pour fournir les informations à propos du signalement d'accident en se basant sur les données d'image, les informations à propos du signalement d'accident comprenant une représentation schématique de l'accident basée sur les données d'image.

7. Procédé pour un véhicule (100) destiné à fournir un signalement d'accident à propos d'un accident à un centre d'appel d'urgence, le procédé comprenant :
obtention (110) de données de capteur en provenance de capteurs internes et de capteurs externes du véhicule (100) ;
détermination (120) d'informations à propos des occupants du véhicule (100) en se basant sur les données de capteur, reconnaissance, en se basant sur une reconnaissance d'objet dans les données de capteur, d'au moins une partie des autres acteurs de la circulation impliqués dans l'accident,
obtention, par le biais de la communication de véhicule à véhicule, d'informations à propos d'une identification d'au moins l'un des autres acteurs de la circulation impliqués dans l'accident,
détermination (130) d'informations à propos des autres acteurs de la circulation impliqués dans l'accident, en se basant sur la reconnaissance d'objet et en se basant sur l'identification de l'au moins un autre acteur de la circulation impliqué dans l'accident, divisé en une pluralité de catégories,
la pluralité de catégories comprenant au moins les catégories piéton, deux-roues et automobile,
et
fourniture (140) d'informations à propos du signalement d'accident en se basant sur les informations déterminées à propos des occupants du véhicule et en se basant sur les informations déterminées à propos des autres acteurs de la circulation impliqués dans l'accident, catégorisés en fonction de la pluralité de catégories.

8. Programme comprenant un code de programme destiné à mettre en œuvre le procédé selon la revendication 7 lorsque le code de programme est exécuté sur un ordinateur, un processeur, un module de contrôle ou un composant matériel programmable.
